(19) Europäisches Patentamt
European Patent Office
Office européen des brevets

(11) Veröffentlichungsnummer: **0 310 956**
**A2**

(12) **EUROPÄISCHE PATENTANMELDUNG**

(21) Anmeldenummer: **88116175.6**

(22) Anmeldetag: **30.09.88**

(51) Int. Cl.4: **C08L 67/02 , C08K 7/14 , //(C08L67/02,51:04,25:12,69:00, 63:00)**

(30) Priorität: **07.10.87 DE 3733856**

(43) Veröffentlichungstag der Anmeldung: **12.04.89 Patentblatt 89/15**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Seiler, Erhard, Dr.**
**Erpolzheimer Strasse 1**
**D-6700 Ludwigshafen(DE)**
Erfinder: **Ruppmich, Karl**
**Koenigsbacher Strasse 134**
**D-6700 Ludwigshafen(DE)**
Erfinder: **Knoll, Manfred**
**Pfrimmstrasse 1**
**D-6521 Wachenheim(DE)**
Erfinder: **Lausberg, Dietrich, Dr.**
**Nachtigalstrasse 32 a**
**D-6700 Ludwigshafen(DE)**
Erfinder: **Schlichting, Karl, Dr.**
**Virchowstrasse 12**
**D-6712 Bobenheim-Roxheim(DE)**
Erfinder: **Koetting, Manfred**
**Alemannenstrasse 8**
**D-6704 Mutterstadt(DE)**

(54) **Glasfaserverstärkte thermoplastische Formmassen auf der Basis von Polyestern und Pfropfpolymerisaten.**

(57) Thermoplastische Formmassen auf der Basis von thermoplastischen Polyestern ($a_1$), Pfropfpolymerisaten mit Acrylatkautschuken als Pfropfgrundlage, Copolymeren aus vinylaromatischen Monomeren und Acrylnitril oder Methacrylnitril, einer Flammschutzmittelkombination aus halogenhaltigem Oligo- oder Polycarbonat oder Polyepoxid ($b_1$) und einer synergistischen Metallverbindung ($b_2$) sowie Glasfasern (C) weisen neben einem guten Brandschutz auch ausgezeichnete mechanische Eigenschaften auf.

EP 0 310 956 A2

# Glasfaserverstärkte thermoplastische Formmassen auf der Basis von$00000000 Polyestern und Pfropfpolymerisaten

Die Erfindung betrifft thermoplastische Formmassen, enthaltend als wesentliche Komponenten

A) 45 bis 90 Gew.% einer Mischung aus

$a_1$) 50 bis 80 Gew.% eines Polyesters

$a_2$) 10 bis 25 Gew.% eines Pfropfpolymerisats aufgebaut aus

$a_{21}$) 50 bis 90 Gew.% einer Pfropfgrundlage aus einem kautschukelastischen Polymeren auf Basis von

$a_{211}$) 95 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen

$a_{22}$) 10 bis 50 Gew.% einer Pfropfauflage aus

$a_{221}$) 50 bis 90 Gew.% Styrol oder substituierten Styrolen der allgemeinen Formel I

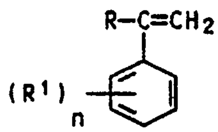 (I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und

$a_{222}$) 10 bis 50 Gew.% Acrylnitril oder Methacrylnitril oder deren Mischungen und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 50 Gew.% Acrylnitril oder Methacrylnitril oder deren Mischungen,

B) 5 bis 20 Gew.% einer Flammschutzmittelkombination aus

$b_1$) 40 bis 90 Gew.%, bezogen auf B) eines halogenhaltigen Oligo-oder Polycarbonats oder Polyepoxids oder deren Mischungen,

$b_2$) 10 bis 60 Gew.% einer synergistisch wirkenden Verbindung eines Metalls der V. Hauptgruppe

C) 5 bis 50 Gew.% Glasfasern.

Außerdem betrifft die Erfindung die Verwendung derartiger Formmassen zur Herstellung von Formkörpern und Formkörper, die aus den erfindungsgemäßen Formmassen als wesentliche Komponenten erhältlich sind.

In der DE-B-27 58 497 werden thermoplastische Formmassen auf der Basis von Polyestern und modifizierten Styrol/Acrylnitril (SAN)-Copolymeren beschrieben, wobei als Modifizierungsmittel Acrylester und/oder $\alpha$-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit. Auch die Stabilität der Eigenschaften bei längerer Lagerung bei höheren Temperaturen ist nicht befriedigend.

Der vorliegenden Erfindung lag daher die Aufgabe zugrunde, flammgeschützte thermoplastische Formmassen auf der Basis von Polyestern und Pfropfpolymeren zur Verfügung zu stellen, die die vorstehend beschriebenen Nachteile nicht aufweisen. Insbesondere sollte auch eine zufriedenstellende Langzeitstabilität der mechanischen Eigenschaften bei erhöhten Temperaturen erreicht werden. Außerdem sollte ein Ausblühen des Flammschutzmittels aus den aus den Massen hergestellten Formkörpern vermieden werden, ohne das mechanische Eigenschaftsniveau stark zu beeinträchtigen.

Diese Aufgabe wird erfindungsgemäß durch die eingangs definierten thermoplastischen Formmassen

gelöst.

Als Komponente A enthalten die erfindungsgemäßen Formmassen 45 bis 90, insbesondere 55 bis 85 und besonders bevorzugt 60 bis 85 Gew.% einer Mischung aus

$a_1$) 50 bis 80 Gew.% eines Polyesters
$a_2$) 10 bis 25 Gew.% eines Pfropfpolymerisats und
$a_3$) 10 bis 25 Gew.% eines Styrol-Acrylnitril-Copolymeren.

Die in den erfindungsgemäßen Formmassen enthaltenen Polyester $a_1$) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, wie z.B. Polyethylenterephthalat oder Polybutylenterephthalat oder deren Mischungen werden besonders bevorzugt.

Die relative Viskosität $\eta_{spec}/c$ der Polyester, gemessen an einer 0,5 gew.%igen Lösung in einem Phenol/o-Dichlorbenzolgemisch (Gewichtsverhältnis 3:2) bei 25 °C liegt im allgemeinen im Bereich von 1,2 bis 1,8 dl/g.

Der Anteil der Komponente $a_1$) an den erfindungsgemäßen Formmassen beträgt 50 bis 80, vorzugsweise 50 bis 75 und insbesondere 50 bis 70 Gew.%, bezogen auf das Gesamtgewicht der Komponenten $a_1$)+$a_2$)+$a_3$).

Das Pfropfpolymerisat $a_2$), welches 10 bis 25, insbesondere 12 bis 20 Gew.% der Komponente A ausmacht, ist aufgebaut aus

$a_{21}$) 50 bis 90 Gew.% einer Pfropfgrundlage auf Basis von

$a_{211}$) 95 bis 99,9 Gew.% eines $C_2$-$C_{10}$-Alkylacrylats und $a_{212}$) 0,1 bis 5 Gew.% eines polyfunktionellen, vorzugsweise difunktionellen Monomeren mit mindestens zwei olefinischen, nicht konjugierten Doppelbindungen, und

$a_{22}$) 10 bis 50 Gew.% einer Pfropfauflage aus

$a_{221}$) 50 bis 90 Gew.% Styrol oder substituierten Styrolen der allgemeinen Formel I oder deren Mischungen, und

$a_{222}$) 10 bis 50 Gew.% Acrylnitril oder Methacrylnitril oder deren Mischungen.

Bei der Komponente $a_{21}$) handelt es sich um ein Elastomeres, welches eine Glasübergangstemperatur von unter -20, insbesondere unter -30 °C aufweist.

Als Monomere für die Herstellung des Elastomeren werden als Hauptmonomere $a_{211}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.%, bezogen auf das Gesamtgewicht $a_{211}$ + $a_{212}$, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $a_{21}$) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators

werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $a_{21}$) am Pfropfpolymerisat $a_2$) beträgt 50 bis 90, vorzugsweise 55 bis 85 und insbesondere 60 bis 80 Gew.%, bezogen auf das Gesamtgewicht von $a_2$).

Auf die Pfropfgrundlage $a_{21}$) ist eine Pfropfhülle $a_{22}$) aufgepfropft, die durch Copolymerisation von

$a_{221}$) 50 bis 90, vorzugsweise 60 bis 90 und insbesondere 65 bis 80 Gew.% Styrol oder substitiierten Styrolen der allgemeinen Formel I

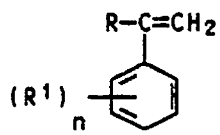

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, und

$a_{222}$) 10 bis 50, vorzugsweise 10 bis 40 und insbesondere 20 bis 35 Gew.% Acrylnitril oder Methacrylnitril oder deren Mischungen

erhältlich ist.

Die Pfropfhülle $a_{22}$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Das Pfropfmischpolymerisat ($b_1$ + $b_2$) weist eine mittlere Teilchengröße von vorzugsweise 100 bis 1000 nm, insbesondere von 200 bis 700 nm ($d_{50}$-Gewichtsmittelwert) auf. Die Bedingungen bei der Herstellung des Elastomeren $b_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat $a_2$ zählen im Rahmen dieser Erfindung auch die bei der Pfropfmischpolymerisation zur Herstellung der Komponente $a_{22}$) entstehenden freien, nicht gepfropften Homo- und Copolymerisate, deren Anteil an der Komponente $a_2$ von den Bedingungen bei der Herstellung der Pfropfauflage abhängt.

Nachstehend seien einige bevorzugte Pfropfpolymerisate angeführt:

$a_2$/1: 60 Gew.% Pfropfgrundlage $a_{21}$) aus

$a_{211}$) 98 Gew.% n-Butylacrylat und

$a_{212}$) 2 Gew.% Dihydrodicyclopentadienylacrylat und 40 Gew.% Pfropfhülle $a_{22}$) aus

$a_{221}$) 75 Gew.% Styrol und

$a_{222}$) 25 Gew.% Acrylnitril

$a_2$/2: Pfropfgrundlage wie bei $a_2$/1 mit 5 Gew.% einer Pfropfhülle aus

$a_{221}$) 12,5 Gew.% Styrol (1. Pfropfstufe) und 35 Gew.% einer zweiten Pfropfstufe aus

$a_{221}$) 75 Gew.% Styrol und

$a_{222}$) 25 Gew.% Acrylnitril

$a_3/2$: Pfropfgrundlage wie bei $a_2/1$ mit 13 Gew.% einer ersten Pfropfstufe aus Styrol und 27 Gew.% einer zweiten Pfropfstufe aus Styrol und Acrylnitril im Gewichtsverhältnis 3:1

Als Komponente $a_3$) enthalten die erfindungsgemäßen Formmassen 10 bis 25, vorzugsweise 12 bis 20 Gew.% eines Copolymerisats aus

$a_{31}$) 50 bis 90, vorzugsweise 55 bis 90 und insbesondere 65 bis 85 Gew.% Styrol und/oder substituierten Styrolen der allgemeinen Formel I und

$a_{32}$) 10 bis 50, vorzugsweise 10 bis 45 und insbesondere 15 bis 35 Gew.% Acrylnitril und/oder Methacrylnitril.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von $a_2$:$a_3$ liegt im Bereich von 1:2,5 bis 2,5:1, vorzugsweise von 1:2 bis 2:1 und insbesondere von 1:1,5 bis 1,5:1.

Als Komponente B enthalten die erfindungsgemäßen Formmassen 5 bis 20, vorzugsweise 6 bis 18 Gew.% einer Flammschutzmittelkombination aus

$b_1$) 40 bis 90, vorzugsweise 50 bis 80 Gew.% eines halogenhaltigen Oligooder Polycarbonats oder Polyepoxids und

$b_2$) 10 bis 60, vorzugsweise 20 bis 50 Gew.% einer synergistisch wirkenden Verbindung eines Metalls der V. Hauptgruppe des Periodensystems.

Als halogenhaltige Oligo- oder Polycarbonate werden vorzugsweise solche mit wiederkehrenden Einheiten

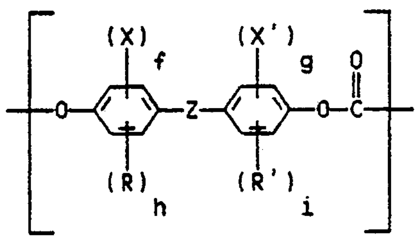

eingesetzt, wobei

X und X′ Chlor- oder Brom, vorzugsweise Brom darstellen und

f und g jeweils ganze Zahlen im Bereich von 1 bis 4 sind, und

R und R′ $C_1$-$C_6$-Alkyl- oder Alkoxygruppen oder $C_6$-$C_{12}$-Arylgruppen, vorzugsweise Methyl, Ethyl oder Phenyl darstellen und

h und i jeweils Werte im Bereich von 0 bis 3 haben.

Besonders bevorzugt werden Produkte in denen X und X′ Brom sind und f und g Werte von 1 oder 2 haben. Derartige Produkte sind an sich bekannt und in der Literatur beschrieben.

Der Parameter Z kann eine chemische Bindung, -O-, -CO-, -SO-, -$SO_2$- oder -CR″R‴ sein, wobei R″ und R‴ jeweils Wasserstoffatome, $C_1$-$C_6$-Alkyl-, vorzugsweise Methyl- oder Ethyl-, oder Alkoxygruppen oder Aryl-, vorzugsweise Phenylgruppen darstellen.

Als besonders bevorzugte Beispiele seien Oligo- und Polycarbonate auf der Basis von Tetrabrombisphenol A (2,2′-Di-(3,5-dibrom-4-hydroxyphenyl)propan ($b_1$/1) genannt. Weitere Beispiele sind Oligo- und Polycarbonate auf der Basis von

2,2′-Di(3-brom-5-methyl-4-hydroxyphenyl)propan ($b_1$/2),
Di(3,5-dibrom-4-hydroxyphenyl)methan ($b_1$/3),
Di(3-brom-4-hydroxyphenyl)methan ($b_1$/4),
1,1-Di(3,5-dibrom-4-hydroxyphenyl)ethan ($b_1$/5),
3,3′,5,5′-Tetrabrom-4,4′-dihydroxydiphenylsulfon (($b_1$/6),
3,3′,5,5′-Tetrabrom-4,4′-dihydroxybenzophenon ($b_1$/7),
3,3′,5,5′-Tetrabrom-4,4′-dihydroxydiphenyl (($b_1$/8) und
3,3′,5,5′-Tetrabrom-4,4′-dihydroxydiphenylether (($b_1$/9).

Dargestellt durch die vorstehende allgemeine Formel werden diese Produkte folgendermaßen charakterisiert:

| Verbindung | X | f | X′ | g | R | h | R′ | i | Z |
|---|---|---|---|---|---|---|---|---|---|
| $b_1/1$ | Br | 2 | Br | 2 | - | 0 | - | 0 | $-C(CH_2)_2$ |
| $b_1/2$ | Br | 1 | Br | 1 | $CH_3$ | 1 | $CH_3$ | 1 | $-C(CH_2)_2$ |
| $b_1/3$ | Br | 2 | Br | 2 | - | 0 | - | 0 | $-CH_2$ |
| $b_1/4$ | Br | 1 | Br | 1 | - | 0 | - | 0 | $-CH_2$ |
| $b_1/5$ | Br | 2 | Br | 2 | - | 0 | - | 0 | $-CHCH_3$ |
| $b_1/6$ | Br | 2 | Br | 2 | - | 0 | - | 0 | $-SO_2-$ |
| $b_1/7$ | Br | 2 | Br | 2 | - | 0 | - | 0 | -CO- |
| $b_1/8$ | Br | 2 | Br | 2 | - | 0 | - | 0 | chem.Bdg. |
| $b_1/9$ | Br | 2 | Br | 2 | - | 0 | - | 0 | -O- |

Die Herstellung der halogenhaltigen Oligo- oder Polycarbonate kann nach den Verfahren erfolgen, die für die Herstellung von Polycarbonaten bekannt und in der Literatur beschrieben sind. Einige der Produkte, z.B. ein Oligocarbonat auf Basis von $b_1/1$ sind auch im Handel erhältlich.

Halogenhaltige Polyepoxide erhält man durch Ersetzen der Carbonatgruppe in halogenhaltigen Oligo- oder Polycarbonaten durch eine Epoxygruppe enthaltende Struktur. Hierbei werden Epoxygruppen der Struktur

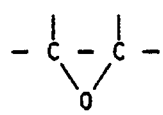

bevorzugt.

Daraus ergibt sich dann als bevorzugte allgemeine Formel für halogenhaltige Polyepoxide

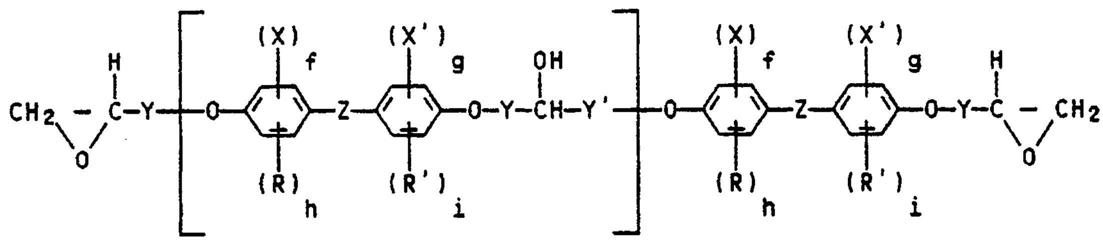

wobei X, X′, R, R′, Z, f, g, h und i die gleiche Bedeutung wie in den halogenhaltigen Polycarbonaten haben und Y und Y′ vorzugsweise eine Alkylengruppe mit 1 bis 4 C-Atomen, insbesondere $-CH_2-$ sind.

Ein besonders bevorzugtes Beispiel aus der Gruppe der halogenhaltigen Polyepoxide ist unter der Bezeichnung Makteshim F 2400 von der Fa. Makteshim Chemicals erhältlich und hat folgende Struktur

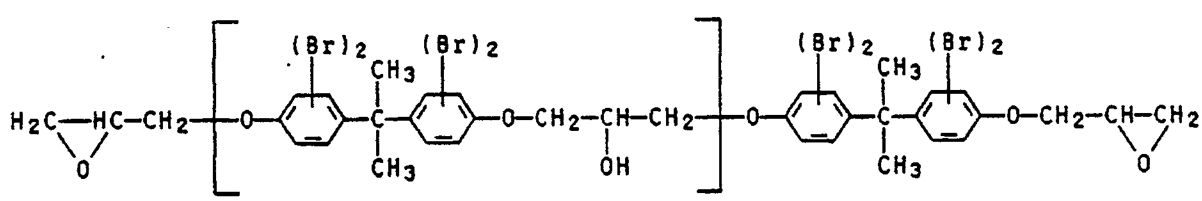

Es handelt sich dabei um ein Polykondensat aus Tetrabrombisphenol A und Epichlorhydrin mit endständigen Epoxygruppen.

Die Herstellung von halogenhaltigen Polyepoxiden kann durch Umsetzung von Dihydroxyverbindungen

mit Epoxygruppen enthaltenden Monomeren erfolgen, z.B. nach den US-Patentschriften 3 238 083 und 3 277 051.

Bei der Komponente $b_2$) der Flammschutzmittelkombination handelt es sich um eine synergistisch wirkende Verbindung eines Metalls der V. Hauptgruppe des Periodensystems. Bevorzugt werden Verbindungen des Antimons, insbesondere Antimontrioxid. Grundsätzlich können jedoch auch andere Antimonverbindungen eingesetzt werden.

In der Regel werden die Antimonverbindungen in einer solchen Menge eingesetzt, daß sich ein Antimongehalt von 1 bis 7 Gew.%, bezogen auf das Gesamtgewicht der Formmassen ergibt. Die halogenierten Komponenten $b_1$) sind im allgemeinen in einer solchen Menge vorhanden, daß sich ein Halogengehalt von 3 bis 10 Gew.%, bezogen auf das Gesamtgewicht der Formmassen, ergibt.

Als Komponente C enthalten die erfindungsgemäßen Formmassen 5 bis 50, insbesondere 7 bis 45 und besonders bevorzugt 10 bis 40 Gew.%, bezogen auf das Gesamtgewicht der Formmassen, an Glasfasern. Dabei handelt es sich um kommerziell erhältliche Produkte.

Diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxysilanen oder anderen Polymerüberzügen beschichtet sein.

Neben den wesentlichen Komponenten A, B und C können die erfindungsgemäßen Formmassen bis zu 20, vorzugsweise bis zu 15 und insbesondere 2 bis 12 Gew.% einer polymeren Komponente D mit Carboxyl-, Carboxylderivat-, Hydroxyl- oder Epoxygruppen enthalten.

Grundsätzlich eignen sich alle Arten von Polymerisaten, in den die Carboxyl-, Hydroxyl- oder Epoxygruppen im wesentlichen frei zur Verfügung stehen.

Nachstehend werden einige besonders bevorzugte Beispiele derartiger funktioneller Polymerer näher beschrieben.

Als erste Gruppe seien hier elastomere Polymere mit Epoxy- und/oder Carboxylgruppen an der Oberfläche genannt.

Für die Erfindung ist dabei wesentlich, daß die haftvermittelnden Epoxy- und/oder Carboxylgruppen an der Oberfläche vorhanden sind.

Die Epoxy- und/oder Carboxylgruppen wirken vermutlich als Haftvermittler zwischen dem Polyester $a_1$) und dem Pfropfpolymeren $a_2$). Ob diese Haftvermittlung auf der Bildung kovalenter chemischer Bindungen oder auf physikalischen Wechselwirkungen (von der Waals, Dipol-Dipol etc.) beruht, kann noch nicht mit Sicherheit gesagt werden.

Vorzugsweise werden durch Emulsionspolymerisation hergestellte Pfropfpolymere mit Glasübergangstemperaturen unter 0°C und Gelgehalten von mehr als 50 % eingesetzt.

Der hohe Gelgehalt des elastomeren Polymerisats bringt eine Verbesserung der mechanischen Eigenschaften und der Oberflächengüte der Formmassen mit sich. Der hohe Gelgehalt bringt es auch mit sich, daß die Fließfähigkeit der Polymeren B) nur sehr gering ist, so daß ein Schmelzindex häufig unter normalen Bedingungen nicht bestimmbar ist. Die Polymeren zeigen vielmehr ein elastisches Verhalten, d.h. sie reagieren auf die Einwirkung einer formverändernden Kraft mit einer elastischen Rückstellkraft (vgl. B. Vollmert, Grundriß der makromolekularen Chemie, Bd. IV, S. 85 ff, E. Vollmert, Verlag Karlsruhe 1979).

Die elastomeren Pfropfpolymere, die aus einem in Emulsion hergestellten Kautschuk mit einer Glasübergangstemperatur von unter 0°C aufgebaut sind, und an der Oberfläche Epoxy- oder Carboxylgruppen aufweisen, können durch Emulsionspolymerisation in an sich bekannter Weise, wie sie z.B. in Houben-Weyl, Methoden der organischen Chemie, Band XII. I (1961) beschrieben wird, hergestellt werden. Die verwendbaren Emulgatoren und Katalysatoren sind an sich bekannt.

Nur stellvertretend seien hier als Monomere für die Herstellung des Kautschuks Acrylate wie z.B. n-Butylacrylat und 2-Ethylhexylacrylat, Methacrylat, Butadien und Isopren genannt. Diese Monomeren können auch mit anderen Monomeren wie z.B. Styrol, Acrylnitril und Vinylethern copolymerisiert werden.

Monomere, die eine Kopplung an die Komponente A) bewirken können, sind solche, die Epoxy und/oder Carboxyl-Gruppen enthalten. Beispiele für solche Monomeren sind für Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Die durch Emulsionspolymerisation hergestellten Pfropfpolymeren der Komponente D) (Dispersionspolymeren) können mehrschalig sein, z.B. kann der Kern und die äußere Schale gleich sein, außer daß die äußere Schale zusätzliche Epoxy- und/oder Carboxylgruppen enthält. Beispiele dafür sind ein innerer Kern aus n-Butylacrylat und eine äußere Schale aus n-Butylacrylat und Glycidylmethacrylat, oder ein innerer Kern aus Butadien und eine äußere Schale aus Butadien und Glycidylmethacrylat. Der Kern und die Schale können jedoch auch verschieden aufgebaut sein, z.B. ein innerer Kern aus Butadien und eine äußere Schale aus n-Butylacrylat und Glycidylmethacrylat.

Natürlich kann der Kautschuk auch homogen aufgebaut sein, z.B. einschalig aus einem Copolymer von n-Butylacrylat und Glycidylmethacrylat oder Butadien und Glycidylmethacrylat.

Die Kautschukteilchen können auch vernetzt sein. Als Vernetzer wirkende Monomere sind beispielsweise Butadien, Divinylbenzol, Diallylphthalat und Dihydrodicyclopentadienylacrylat geeignet. Der Anteil dieser Vernetzer an der Komponente D) beträgt vorzugsweise unter 5 Gew.%, bezogen auf B).

Als weitere Beispiele für die Komponente D) seien Copolymere, aufgebaut aus Styrol und/oder substituierten Styrolen der allgemeinen Formel I und Epoxy- oder Lactamgruppen enthaltenden Monomeren genannt.

Der Anteil des Styrols und/oder der substituierten Styrole der an der Komponente D) liegt im allgemeinen im Bereich von 50 bis 99,9 Gew.%, vorzugsweise von 70 bis 95 Gew.%.

Selbstverständlich können auch Mischungen verschiedener substituierter Styrole oder Mischungen aus Styrol und substituierten Styrolen eingesetzt werden, was häufig sogar Vorteile mit sich bringt.

Durch Mitverwendung von Monomeren mit Epoxy- oder Lactamgruppen bei der Polymerisation des Styrols und/oder der substituierten Styrole werden die erfindungsgemäßen Komponenten B, die sich von Styrolpolymerisaten ableiten, hergestellt.

Unter den Monomeren, die Epoxygruppen der allgemeinen Formel

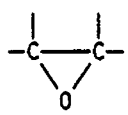

enthalten, werden solche mit mehreren Epoxygruppen bevorzugt. Grundsätzlich sind alle Epoxygruppen enthaltenden Monomeren geeignet, solange gewährleistet ist, daß die Epoxygruppe nach der Umsetzung in freier Form vorliegt.

Es sei hier erwähnt, daß die Einführung der freien Epoxygruppen in das Polymere D) auch durch Epoxidierung von Polymeren aus den Monomeren $B_1$ mit Epoxidierungsmitteln möglich ist.

Der Anteil des Epoxygruppen enthaltenden Monomeren beträgt 0,1 bis 30 Gew.%, bevorzugt 0,5 bis 20 Gew.% und besonders bevorzugt 1 bis 10 Gew.%, bezogen auf die Komponente B.

Nur beispielhaft seien hier als Vertreter für Epoxygruppen enthaltende Monomere Glycidylgruppen enthaltende Monomere genannt, wie z.B. Vinylglycidylether, Allylglycidylether und (Meth)acrylate mit Glycidylgruppen, insbesondere Glycidylacrylat und Glycidylmethacrylat.

Als bevorzugte Komponenten B, die sich von Styrolpolymerisaten mit Epoxygruppen ableiten, seien stellvertretend Copolymere aus

$B_1$) 90 bis 99 Gew.% Styrol, α-Methylstyrol und/oder p-Methylstyrol
$B_2$) 1 bis 10 Gew.% Glycidyl(meth)acrylat

oder

$B_1$) 50 bis 91 Gew.% Styrol, α-Methylstyrol und/oder p-Methylstyrol
$B_2$) 1 bis 10 Gew.% Glycidyl(meth)acrylat
$B_3$) 8 bis 40 Gew.% Acrylnitril und/oder Methacrylnitril

genannt.

Als zweite Gruppe von Monomeren sind Lactamgruppen enthaltende Monomere geeignet.

Diese enthalten eine Lactamgruppe der allgemeinen Formel

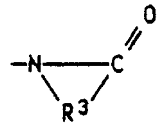

wobei $R^3$ eine verzweigte oder lineare Alkylengruppe mit 2 bis 15 C-Atomen darstellt.

Nur stellvertretend seien hier β-Propiolactame (Azetidin-2-one) der allgemeinen Formel

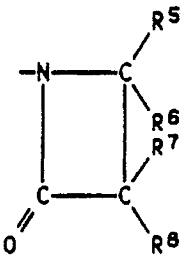

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3'-Dimethyl-3-propiolactam, 2-Pyrrolidone

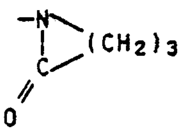 ,

ε-Caprolactam

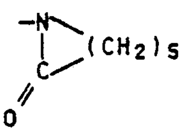 ,

7-Önantholactam, 8-Capryllactam und γ-Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in (VI)

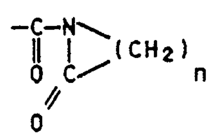 (VI)

über eine Carbonylgruppe am Stickstoff in die entsprechenden Monomeren eingebaut.

Ein besonders bevorzugtes Beispiel hierfür ist N-(Meth)acryloyl-ε-Caprolactam (VII)

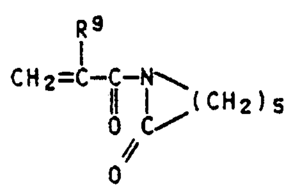 (VII)

wobei $R^9$ ein Wasserstoffatom oder eine Methylgruppe ist.

Der Anteil der Monomeren mit Lactamgruppen an den Komponenten D) beträgt 0,1 bis 30 Gew.%,

vorzugsweise 0,1 bis 5 Gew.%, bezogen auf die Komponente B.

Daraus ergeben sich für Komponente D) beispielsweise folgende Zusammensetzungen

$B_1$) 95 bis 99,9 Gew.% Styrol, α-Methylstyrol und/oder p-Methylstyrol

$B_2$) 0,1 bis 5 Gew.% N-(Meth)acryloyl-ε-caprolactam

oder, falls Monomere $B_3$ enthalten sind

$B_1$) 55 bis 91 % Styrol, α-Methylstyrol und/oder p-Methylstyrol

$B_2$) 0,1 bis 5 Gew.% N-(Meth)acryloyl-ε-caprolactam

$B_3$) 8 bis 40 Gew.% (Meth)acrylnitril.

Als polymere Komponenten mit Hydroxylgruppen sind prinzipiell alle Polymere mit Hydroxylgruppen, die im wesentlichen frei zur Verfügung stehen, geeignet.

Als erste Gruppe besonders geeigneter Polymerer dieses Typs sind Polykondensate aus aliphatischen oder aromatischen Diolen oder höherwertiger Alkohole mit Epihalogenhydrinen zu nennen. Derartige Verbindungen und Verfahren zu ihrer Herstellung sind dem Fachmann an sich bekannt, weshalb sich hier nähere Angaben erübrigen. Nur als Beispiele seien hier die Polykondensate aus Epihalogenhydrinen und Dihydroxyverbindungen, die auch zur Herstellung von Polycarbonaten eingesetzt werden können, genannt, die sich als besonders vorteilhaft herausgestellt haben. Daneben sind aber grundsätzlich auch andere, insbesondere aliphatische Diole oder höherwertige aromatische oder aliphatische Alkohole geeignet.

Wegen der leichten Zugänglichkeit wird ein Polykondensat aus Bisphenol A und Epichlorhydrin mit der Struktur

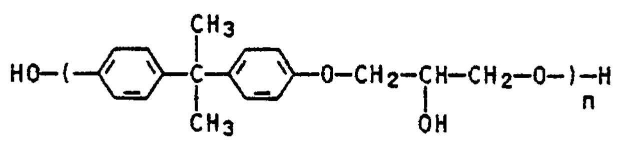

bevorzugt verwendet.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymeren als Pfropfgrundlagen geeignet sind, die mit den Komponenten a) und B) nicht vollkommen unverträglich sind. Ein gewisser Grad an Unverträglichkeit kann durch eine Erhöhung des Anteils der Hydroxylgruppen ausgeglichen werden.

Geeignete Komponenten D sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere mit den Komponenten A) und B) ist. Je besser die Verträglichkeit, desto geringer kann der Anteil der OH-Gruppen sein. Aus dem Vorstehenden ergibt sich, daß eine Vielzahl von polymeren Verbindungen als Komponente D) geeignet sind, von denen nachfolgend nur als Beispiel einige besonders bevorzugte Arten näher vorgestellt werden.

Die erste Gruppe sind Polymere aus Vinylphenylcarbinolen und Copolymere der vorstehend genannten Basispolymeren mit einem Gehalt von bis zu 100 mol% Vinylphenylcarbinolen,. wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien die Polymeren und Copolymeren dieser Gruppe mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Daneben sind grundsätzlich Polymere und Copolymere mit allen polymerisierbaren oder pfropfbaren Alkoholen zu nennen.

Die Herstellung der Komponente B mit Hydroxylgruppen kann nach üblichen Verfahren zur Polykondensation bzw. Pfropf- oder Copolymerisation erfolgen, weshalb sich hier nähere Angaben erübrigen.

Als Komponente D geeignet sind auch Olefinpolymere, welche Epoxygruppen enthalten. Die Epoxygruppen können in das Olefinpolymere durch Copolymerisation oder Pfropfpolymerisation mit Epoxygruppen-tragenden copolymerisierbaren Monomeren oder durch Epoxidierung eines Olefinpolymeren eingebaut werden. Vorteilhaft sind diese Polymeren aus 0,1 bis 50 Gew.%, insbesondere 0,5 bis 10 Gew.%, Monomeren mit Epoxygruppen aufgebaut.

Bevorzugt sind Copolymere aus mindestens 50 Mol%, im besonderen mindestens 50 Gew.% aus einem oder mehreren Olefinen mit 2 bis 10 Kohlenstoffatomen, die außerdem mindestens ein copolymerisierbares Monomeres mit Epoxygruppen und gegebenenfalls weitere copolymerisierbare Monomere enthalten.

Bevorzugte Olefine in solchen Copolymeren sind Ethylen, Propylen, Buten-1, Isobutylen, Penten-1, Hexen-1, Hepten-1, Octen-1 oder Gemische, vorzugsweise Ethylen und Propylen.

Bevorzugte epoxygruppentragende Monomere sind Ether der allgemeinen Formel

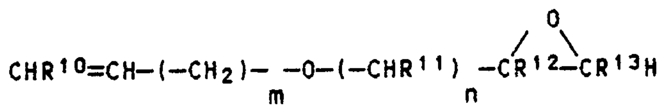

wobei m = eine ganze Zahl zwischen 0 und 20
und n = eine ganze Zahl zwischen 1 und 10
und $R^{10}$, $R^{11}$, $R^{12}$ und $R^{13}$ H oder eine Alkylgruppe mit 1 bis 8 C-Atomen darstellen.

Bevorzugt ist m = 0 oder 1, n = 1 und $R^{10}$, $R^{11}$, $R^{12}$ = H.

Bevorzugte Verbindungen sind Allylglycidylether oder Vinylglycidylether. Weitere epoxygruppentragende Monomere sind epoxygruppentragende Olefine der allgemeinen Formel

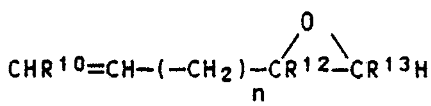

wobei n, $R^{10}$, $R^{12}$ und $R^{13}$ die gleiche Bedeutung haben wie in der vorgenannten Formel, vorzugsweise ist $R^{10}$ H oder Methyl und $R^{12}$ und $R^{13}$ sind H oder Methyl oder Ethyl und n hat einen ganzzahligen Wert im Bereich von 1 bis 5.

Besonders bevorzugt sind Epoxygruppen tragende Ester der Acrylsäure oder Methacrylsäure. Besonders technische Bedeutung haben Glycidylacrylat bzw. Glycidylmethacrylat erlangt.

Bevorzugte Olefinpolymere sind aufgebaut aus

a) 50 bis 90 Gew.% Olefine mit 2 bis 10 Kohlenstoffatomen, vorzugsweise Ethylen
b) 1 bis 50 Gew.% Glycidylacrylat und/oder Glycidylmethacrylat und gegebenenfalls
c) 1 bis 49 Gew.% mindestens eines anderen, copolymerisierbaren Monomeren,

wobei sich die Komponenten a, b und c jeweils auf 100 Gew.% ergänzen.

Die Glasübergangstemperatur des Olefinpolymeren liegt vorzugsweise unter 0° C, besonders bevorzugt unter -20° C. Bevorzugte copolymerisierbare Monomere sind (Meth)acrylate, Vinylester, Vinylether, Methylbutenol. Beispielhaft seien genannt Methyl(meth)acrylat, Ethyl(meth)acrylat, Propyl(meth)acrylat, Butyl(meth)acrylat, besonders bevorzugt sind n-Butylacrylat und 2-Ethylhexylacrylat.

Besonders bevorzugte Olefinpolymerisate sind aufgebaut aus

a) 50 bis 98 Gew.% Ethylen
b) 1 bis 40 Gew.% Glycidyl(meth)acrylat und
c) 1 bis 45 Gew.% n-Butylacrylat und/oder 2-Ethylhexylacrylat,

besonders bewährt haben sich Olefinpolymerisate aus

a) 60 bis 95 Gew.% Ethylen
b) 3 bis 20 Gew.% Glycidyl(meth)acrylat
c) 10 bis 35 Gew.% n-Butylacrylat und/oder 2-Ethylhexylacrylat.

Die Olefinpolymeren können durch beliebige Methoden polymerisiert werden, wie statistische Copolymerisation, Blockcopolymerisation und Pfropfcopolymerisation.

Bevorzugt ist die statistische Copolymerisation unter hohem Druck und bei erhöhter Temperatur. Die Polymeren D) sind im allgemeinen hochmolekular und haben einen Schmelzindex (MFI 190/2, 16, DIN 53 735) von 1 bis 80.

Neben den vorstehend genannten Olefincopolymeren eignen sich auch Produkte, die Carboxylgruppen

oder deren Derivate enthalten und die z.B. in der EP-A 106 027 ausführlich beschrieben sind. Auf diese Anmeldung wird hier wegen näherer Einzelheiten verwiesen.

Als letzte beispielhafte Gruppe für die Komponente D seien Styrolpolymerisate mit Carbonsäuren und/oder deren funktionellen Derivaten genannt.

Diese sind im einzelnen aus
20 bis 95 Gew.% Styrol und/oder substituierten Styrolen der allgemeinen Formel I,
0 bis 40 Gew.% eines primären und/oder sekundären Alkylesters der Acrylsäure oder Methacrylsäure mit 1 bis 8 C-Atomen im Alkoholrest, Acrylnitril und/oder Methacrylnitril,
1 bis 30 Gew.% einer polymerisierbaren Carbonsäure und/oder eines tertiären Esters derselben und/oder eines Anhydrids einer polymerisierbaren Carbonsäure mit 1 bis 20 C-Atomen aufgebaut.

Unter den tertiären Estern der Carbonsäuren werden Ester der Acryl- und Methacrylsäure, insbesondere tert.-Butylacrylat bevorzugt. Als Anhydrid sei hier stellvertretend nur Maleinsäure genannt.

Als Beispiele für diese Gruppe seien stellvertretend Copolymerisate aus Styrol und Maleinsäureanhydrid, die gegebenenfalls noch Acrylnitril und/oder primäre oder sekundäre Alkylacrylate enthalten.

Von den vorstehend genannten, als Komponente D geeigneten Polymeren mit funktionellen Gruppen werden Polymere mit OH-Gruppen, insbesondere das Polykondensat aus Epichlorhydrin und Bisphenol A, Styrol/Acrylnitril/Maleinsäureanhydrid-Copolymere, Styrol/Glycidylmethacrylat-Copolymere und Olefincopolymere mit Epoxygruppen besonders bevorzugt (vgl. auch die Beispiele).

Neben den Komponenten A) bis C) und gegebenenfalls D) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des peroxidischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.% auf die Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearinsäuren, Stearylalkohol, Stearinsäureester und -amide.

Ferner können zugesetzt werden organische Farbstoffe, wie Nigrosin, Pigmente, z.B. Titandioxid, Cadmiumsulfid, Cadmiumsulfid-selenid, Phthalocyanine Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Masse, angewandt werden.

Weichmacher, wie Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid werden vorteilhaft in Mengen bis etwa 20 Gew.%, bezogen auf die Formmasse, zugesetzt. Färbemittel, wie Farbstoffe und Pigmente können in Mengen bis zu etwa 5 Gew.%, bezogen auf die Formmasse, zugesetzt werden.

Die erfindungsgemäßen thermoplastischen Formmassen können hergestellt werden, indem man die Komponenten $a_1$, $a_2$, $a_3$ und B (gegebenenfalls mit D) mischt, in einem Extruder aufschmilzt und die Glasfasern C) über einen Einlaß am Extruder zuführt. Derartige Verfahren sind an sich bekannt und in der Literatur beschrieben. Die Mischtemperaturen im Extruder liegen im allgemeinen im Bereich von 240 bis 300 °C.

Die erfindungsgemäßen Formmassen zeichnen sich durch eine gute Festigkeit, hohe Schlagzähigkeit und eine besonders gute Oberflächenstruktur der daraus hergestellten Formteile aus. Darüber hinaus wird auch eine Verbesserung der Fließfähigkeit und der Wärmebeständigkeit im Vergleich zu entsprechenden Massen mit anderen Flammschutzmittelkombinationen erzielt, ohne daß die flammhemmenden Eigenschaften beeinträchtigt werden.

Beispiele 1 bis 5

Es wurden folgende Komponenten eingesetzt:

$a_1$) Polybutylenterephthalat mit einer Viskositätszahl, bestimmt in 0,5 %iger Lösung in einer Mischung von Phenol/o-Dichlorbenzol (Gew.-Verhältnis 1:1) bei 25 °C, von 108

$a_2$) Pfropfpolymerisat aus

| | | | |
|---|---|---|---|
| 58,5 | Gew.% | n-Butylacrylat | Pfropfgrundlage |
| 1,2 | Gew.% | Dicyclopentadienylacrylat | |
| 30 | Gew.% | Styrol | Pfropfhülle |
| 10 | Gew.% | Acrylnitril | |

hergestellt nach dem in der DE-OS 24 44 584 beschriebenen Verfahren

$a_3$/1 Styrol/Acrylnitril-Copolymerisat aus 65 Gew.% Styrol und 35 Gew.% Acrylnitril mit einer Viskositätszahl von 80, gemessen in 0,5 gew.%iger Lösung in Dimethylformamid (DMF) bei 25 °C

$a_3$/2 α-Methylstyrol/Acrylnitril-Copolymerisat (Gewichtsverhältnis 70/30) mit einer Viskositätszahl von 60, gemessen wie bei $a_3$/1

B/1 Mischung aus

$b_1$) 66,7 Gew.% eines bromierten Polyepoxids (Makteshim F 2400 der Fa. Makteshim Chemicals; Struktur s. S. 9) und

$b_2$) 33,3 Gew.% Antimontrioxid (als 90 %iges Konzentrat in Polyethylen)

B/2 Mischung aus

$b_1$) 71,4 Gew.% eines bromierten Polycarbonats auf der Basis von bromiertem Bisphenol A mit einem Bromgehalt von 46 Gew.%

$b_2$) 28,6 Gew.% Antimontrioxid (als 90 %iges Konzentrat in Polyethylen)

Zum Vergleich wurde

B/V Decabromdiphenylether

anstelle von B/1 oder B/2 eingesetzt.

Die Komponenten $a_1$, $a_2$, $a_3$ und B wurden gemischt, in einem Extruder aufgeschmolzen und die Glasfasern der Schmelze über den Extruder zugeführt. Die Extrusionstemperatur betrug 260 °C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die mechanischen und thermischen Eigenschaften wurden folgendermaßen bestimmt:

| | |
|---|---|
| Vicat B: | DIN 53 460 |
| Biegefestigkeit: | DIN 53 452 |
| E-Modul: | DIN 53 457 |
| Schlagzähigkeit $a_n$: | DIN 53 453 |
| Kerbschlagzähigkeit: | DIN 53 453 |
| Schädigungsarbeit: | DIN 53 443 |
| Brandschutztest: | nach UL 94 (Underwriters Laboratories) |

Die Zusammensetzungen der Formmassen sind der Tabelle 1, die Ergebnisse der Messungen in Tabelle 2 dargestellt.

Tabelle 1

| Zusammensetzung der Formmassen | | | | | | | |
|---|---|---|---|---|---|---|---|
| Beispiel | | Komponente A | | | B | | C |
| | | Zusammensetzung [Gew.%] | | | Art | Menge | |
| | Anteil [Gew.%] | $a_1$ | $a_2$ | $a_3$ | | | |
| 1 | 79,4 | 60 | 20 | 20 $a_3$/1 | B/1 | 12,7 | 16,9 |
| 2 | 70,4 | 60 | 20 | 20 $a_3$/2 | B/1 | 12,7 | 16,9 |
| 3 | 69,9 | 60 | 20 | 20 $a_3$/1 | B/2 | 14,3 | 16,8 |
| 4 (Vgl.) | 71,4 | 60 | 20 | 20 $a_3$/1 | B/V | 11,5 | 17,1 |

Tabelle 3

| | 1 | 2 | 3 | 4* |
|---|---|---|---|---|
| Vicat B [°C] | 134 | 140 | 135 | 126 |
| Belag nach 72 h 120°C | nein | nein | nein | ja |
| Biegefestigkeit $\sigma_{bB}$ [N/mm²] | 140 | 138 | 135 | 130 |
| E-Modul $E_Z$ [N/mm²] | 7700 | 7900 | 7600 | 7700 |
| Schlagzähigkeit $a_n$ [kJ/m²] | 28 | 26 | 26 | 23 |
| Kerbschlagzähigkeit $a_k$ [kJ/m²] | 5,5 | 5,0 | 5,5 | 5,0 |
| Schädigungsarbeit $w_{50}$ [N•m] | 0,6 | 0,5 | 0,6 | 0,3 |
| Fertigteiloberfläche: | | | | |
| unmittelbar nach Verspritzen | s.gut | s.gut | s.gut | gut |
| nach Wärmelagerung | s.gut | s.gut | s.gut | schlecht |
| Bewertung nach UL 94 (1/8") | V-O | V-O | V-O | V-O |

* Vergleich

## Ansprüche

1. Thermoplastische Formmassen, enthaltend als wesentliche Komponenten

A) 45 bis 90 Gew.% einer Mischung aus

$a_1$) 50 bis 80 Gew.% eines Polyesters

$a_2$) 10 bis 25 Gew.% eines Pfropfpolymerisats aufgebaut aus

$a_{21}$) 50 bis 90 Gew.% einer Pfropfgrundlage aus einem kautschukelastischen Polymeren auf Basis von $a_{211}$) 95 bis 99,9 Gew.% eines $C_2$-$C_{10}$-Alkylacrylats und $a_{212}$) 0,1 bis 5 Gew.% eines polyfunktionellen Monomeren mit mindestens zwei olefinischen, nicht konjugierten Doppelbindungen

$a_{22}$) 10 bis 50 Gew.% einer Pfropfauflage aus

$a_{221}$) 50 bis 90 Gew.% Styrol oder substituierten Styrolen der allgemeinen Formel I

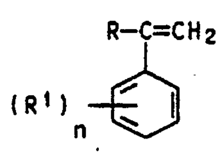

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder

deren Mischungen und

$a_{222}$) 10 bis 50 Gew.% Acrylnitril oder Methacrylnitril oder deren Mischungen und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 50 Gew.% Acrylnitril oder Methacrylnitril oder deren Mischungen,

B) 5 bis 20 Gew.% einer Flammschutzmittelkombination aus

$b_1$) 40 bis 90 Gew.%, bezogen auf B) eines halogenhaltigen Oligo- oder Polycarbonats oder Polyepoxids oder deren Mischungen

$b_2$) 10 bis 60 Gew.% einer synergistisch wirkenden Verbindung eines Metalls der V. Hauptgruppe

C) 5 bis 50 Gew.% Glasfasern.

D) 0 bis 20 Gew.% einer polymeren Komponente mit Carboxyl-, Carboxylderivat-, Hydroxyl- oder Epoxygruppen.

2. Thermoplastische Formmassen, enthaltend als wesentliche Komponenten

A) 55 bis 85 Gew.% einer Mischung aus

$a_1$) 50 bis 80 Gew.% Polyethylenterephthalat oder Polybutylenterephthalat oder deren Mischungen,

$a_2$) 10 bis 25 Gew.% Pfropfpolymerisat aus

$a_{21}$) 50 bis 90 Gew.% Pfropfgrundlage auf Basis von

$a_{211}$) 95 bis 99,9 Gew.% n-Butylacrylat und/oder 2-Ethylhexylacrylat und

$a_{212}$) 0,1 bis 5 Gew.% des difunktionellen Monomeren, und

$a_{22}$) 10 bis 50 Gew.% einer Pfropfauflage aus

$a_{221}$) 50 bis 90 Gew.% Styrol oder $\alpha$-Methylstyrol oder deren Mischungen und

$a_{222}$) 10 bis 50 Gew.% Acrylnitril oder Methacrylnitril oder deren Mischungen und

$a_3$) 10 bis 25 Gew.% eines Copolymerisats aus

$a_{31}$) 50 bis 90 Gew.% Styrol oder $\alpha$-Methylstyrol oder deren Mischungen,

$a_{32}$) 10 bis 50 Gew.% Acrylnitril oder Methacrylnitril oder deren Mischungen,

B) 5 bis 20 Gew. % einer flammschutzmittelkombination aus

$b_1$) 40 bis 90 Gew.%, bezogen auf B) eines halogenhaltigen Oligo- oder Polycarbonats oder Polyepoxids oder deren Mischungen

$b_2$) 10 bis 60 Gew.% einer synergistisch wirkenden Verbindung eines Metalls der V. Hauptgruppe

C) 10 bis 40 Gew.% Glasfasern.

3. Verwendung der thermoplastischen Formmassen gemäß den Ansprüchen 1 und 2 zur Herstellung von Formkörpern und Formteilen.

4. Formkörper, erhältlich aus thermoplastischen Formmassen gemäß den Ansprüchen 1 und 2 als wesentliche Komponenten.